# EUROPÄISCHE PATENTSCHRIFT

(11) **EP 2 193 292 B1**
(45) Veröffentlichungstag und Bekanntmachung des Hinweises auf die Patenterteilung: **23.11.2011**
(21) Anmeldenummer: 08803050.7
(22) Anmeldetag: 15.08.2008
(51) Int. Cl.: F16H 47/04, F16H 3/093

(54) **LEISTUNGSVERZWEIGUNGSGETRIEBE**
POWER SPLIT TRANSMISSION
TRANSMISSION À RÉPARTITION DE PUISSANCE

(30) Priorität: 02.10.2007 DE 102007047194; 02.10.2007 DE 102007047193; 02.10.2007 DE 102007047195; 04.10.2007 DE 102007047511
(43) Veröffentlichungstag der Anmeldung: 09.06.2010
(73) Patentinhaber: ZF Friedrichshafen AG, 88038 Friedrichshafen (DE)
(72) Erfinder: REBHOLZ, Wolfgang, 88045 Friedrichshafen (DE)
(86) Internationale Anmeldenummer: PCT/EP2008/060758
(87) Internationale Veröffentlichungsnummer: WO 2009/047036

(56) Entgegenhaltungen:
- US-A- 3 204 486
- US-A- 3 212 358
- US-A- 4 121 479
- US-A- 5 868 640

## Beschreibung

Die Erfindung bezieht sich auf ein Leistungsverzweigungsgetriebe nach der im Oberbegriff von Anspruch 1 näher definierten Art.

Gattungsgemäße Leistungsverzweigungsgetriebe weisen einen hydrostatischen Leistungszweig und einen hydrodynamischen Leistungszweig, welche in einem Summierungsgetriebe summiert werden, und zwei schaltbare Fahrbereiche in einer Vorwärtsfahrtrichtung und einen Fahrbereich in einer Rückwärtsfahrtrichtung auf.

Die DE 28 54 375 A1 offenbart ein hydrostatisch-mechanisches Getriebe mit Leistungsverzweigung mit einem hydrostatischen und einem mechanischen Leistungszweig, welches zwei Fahrbereiche in einer Vorwärtsfahrtrichtung beinhaltet. Durch die koaxiale Bauweise ist das Getriebe nicht für Arbeitsmaschinen, wie beispielsweise Radlader, geeignet.

Die US 5 868 640 A offenbart ein Leistungsverweigungsgetriebe nach dem Oberbegriff des Hauptanspruchs.

Der vorliegenden Erfindung liegt die Aufgabe zugrunde, ein Leistungsverzweigungsgetriebe mit zwei Fahrbereichen in einer Vorwärtsfahrtrichtung zu schaffen, welches zur Verwendung in einer Arbeitsmaschine, wie beispielsweise einem Radlader, geeignet ist.

Die Aufgabe wird mit einem, auch die kennzeichnenden Merkmale des Hauptanspruchs aufweisenden, gattungsgemäßen Leistungsverzweigungsgetriebe gelöst.

Das Leistungsverzweigungsgetriebe weist einen hydrostatischen Leistungszweig mit einer ersten Hydrostateinheit und einer zweiten Hydrostateinheit und einem mechanischen Leistungszweig auf. Die erste und zweite Hydrostateinheit sind als Hydrostateinheit in Schrägachsen-Bauweise ausgebildet und werden über ein gemeinsames Bauteil in ihrem Hubvolumen verstellt.

Vorzugsweise sind die Hydrostateinheiten benachbart angeordnet. Das Getriebe ist so aufgebaut, dass es einen Achsabstand von der Antriebswelle zur Abtriebswelle aufweist, um den Abstand von dem Antriebsmotor zu den Achsen zur Verwendung in einer Arbeitsmaschine zu ermöglichen. Das Summierungsgetriebe ist als Planetengetriebe ausgebildet, wobei das Hohlrad, vorzugsweise über ein weiteres Stirnrad, mit der Eingangswelle des Leistungsverzweigungsgetriebes in Wirkverbindung steht, das innere Zentralrad mit der ersten hydrostatischen Einheit verbunden ist und der Planetenträger, vorzugsweise über ein weiteres Stirnrad, einerseits mit der zweiten hydrostatischen Einheit und andererseits über ein Schaltgetriebe mit Schaltkupplungen zum Schalten der zwei Fahrbereiche und des Rückwärtsgangs mit einer Abtriebswelle in Wirkverbindung steht.

In einer ersten Ausgangsstellung des gemeinsamen Bauteils zur Verstellung der Hubvolumina der hydrostatischen Einheiten ist die erste hydrostatische Einheit auf ihr Hubvolumen Null und die zweite hydrostatische Einheit auf ihr maximales Hubvolumen verstellt. In der Endstellung des gemeinsamen Bauteils zur Verstellung der Hubvolumina ist die erste hydrostatische Einheit auf ihr maximales Hubvolumen und die zweite hydrostatische Einheit auf ihr Hubvolumen Null verstellt. Dadurch ist es möglich, aus dem Stillstand rein hydrostatisch anzufahren und bei der maximalen Antriebsdrehzahl des Getriebes die Leistung rein mechanisch zu übertragen. Am Ende des ersten Fahrbereichs befindet sich das gemeinsame Bauteil in seiner Endstellung und es wird auf den zweiten Fahrbereich umgeschaltet. Während des Schaltvorgangs ist mindestens eine der beiden Fahrbereichskupplungen in einem Schlupfzustand, bis die hydrostatischen Einheiten auf ihr neues Hubvolumen verstellt sind, welches sich um den Stufensprung vom ersten Fahrbereich zum zweiten Fahrbereich ändert. Dadurch, dass die Fahrbereichskupplungen sich während der Schaltungen in einem Schlupfzustand befinden, kann eine Schaltung ohne Zugkraftunterbrechung realisiert werden.

Weitere Merkmale sind der Figuren-Beschreibung zu entnehmen.

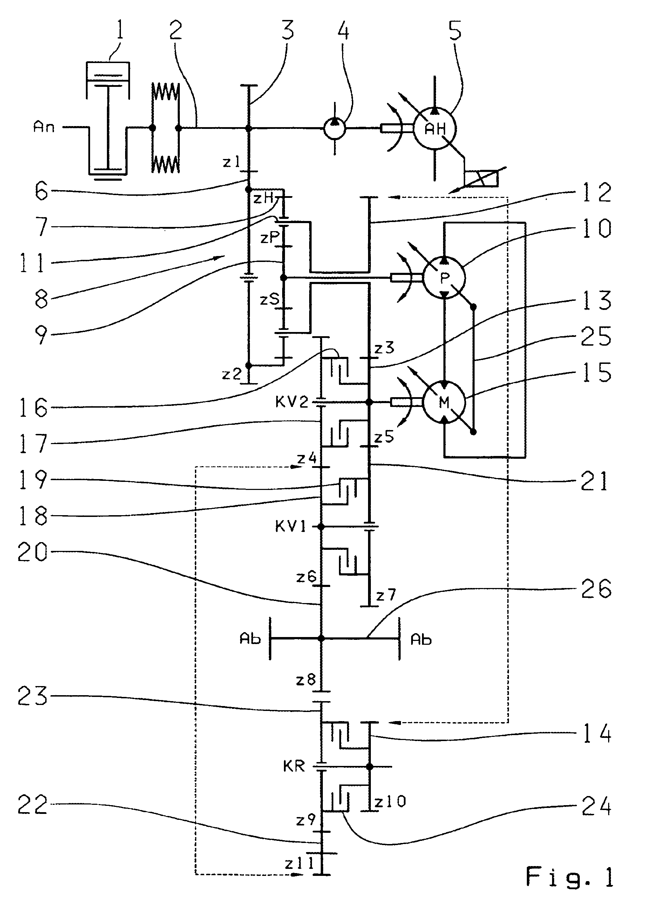

Die einzige Figur zeigt ein Leistungsverzweigungsgetriebe, bei welchem ein Antriebsmotor 1 eine Eingangswelle 2 antreibt, welche mit einem Stirnrad 3 drehfest verbunden ist und zusätzlich eine Speisepumpe 4 und eine Arbeitspumpe 5 antreibt. Das Stirnrad 3 treibt ein Stirnrad 6 an, welches drehfest mit einem äußeren Zentralrad 7 des Planetengetriebes 8 verbunden ist, welches die Funktion eines Summierungsgetriebes hat. Das innere Zentralrad 9 ist mit der ersten hydrostatischen Einheit 10 verbunden. Der Planetenträger 11 ist mit einem Stirnrad 12 drehfest verbunden. Das Stirnrad 12 kämmt mit dem Stirnrad 13 und dem Stirnrad 14. Das Stirnrad 13 ist einerseits mit der zweiten hydrostatischen Einheit 15 und andererseits mit der zweiten Fahrbereichskupplung 16 verbunden. Die zweite Fahrbereichskupplung 16 ist drehfest mit dem Stirnrad 17 verbunden, welches mit dem Stirnrad 18 kämmt. Das Stirnrad 18 ist einerseits mit der ersten Fahrbereichskupplung 19 und andererseits mit dem Stirnrad 20 verbunden. Die erste Fahrbereichskupplung 19 ist drehfest mit dem Stirnrad 21 verbunden, welches mit dem Stirnrad 13 kämmt. Das Stirnrad 18 kämmt zusätzlich mit dem Stirnrad 22, welches mit dem Stirnrad 23 in Eingriff steht. Die Kupplung für Rückwärtsfahrt 24 ist mit dem Stirnrad 23 und dem Stirnrad 14 verbunden. Das Hubvolumen der ersten hydrostatischen Einheit 10 und der zweiten hydrostatischen Einheit 15 wird gleichzeitig über das gemeinsame Bauteil 25 verstellt. In einer ersten Ausgangslage des gemeinsamen Bauteils 25 ist die erste hydrostatische Einheit 10 auf kein Hubvolumen und die zweite hydrostastische Einheit 15 auf ihr maximales Hubvolumen verstellt. Bei drehender Eingangswelle 2, geschlossener erster Fahrbereichskupplung 19 und Ausgangsstellung des gemeinsamen Bauteils 25 steht der Abtrieb 26. Wird nun das gemeinsame Bauteil 25 aus seiner Ausgangsposition verschwenkt, so fördert die erste hydrostatische Einheit 10 Druckmittel an die zweite hydrostatische Einheit 15, und der Abtrieb 26 beginnt sich zu drehen. Wird das gemeinsame Bauteil 25 bis zur Endstellung verschwenkt, so befindet sich die erste hydrostatische Einheit 10 auf ihrem maximalen Hubvolumen und die zweite hydrostatische Einheit 15 auf ihrem Hubvolumen Null. In dieser Stellung wird die gesamte Leistung über den mechanischen Leistungszweig zum Abtrieb 26 übertragen. Zum Schalten in den zweiten Fahrbereich wird die erste Fahrbereichskupplung 19 im Öffnungssinne und die zweite Fahrbereichskupplung 16 im Schließsinne betätigt. Zum Betrieb des Getriebes in einer Rückwärtsfahrtrichtung wird die Kupplung für Rückwärtsfahrt 24 im Schließsinne betätigt. Mit der Speisepumpe 4 wird Druckmittel für die erste und zweite hydrostatische Einheit 10 und 15 sowie zum Betätigen der Kupplungen 16, 19 und 24 bereitgestellt.

### Bezugszeichen

- 1: Antriebsmotor
- 2: Eingangswelle
- 3: Stirnrad
- 4: Speisepumpe
- 5: Arbeitspumpe
- 6: Stirnrad
- 7: äußeres Zentralrad
- 8: Planetengetriebe
- 9: inneres Zentralrad
- 10: erste hydrostatische Einheit
- 11: Planetenträger
- 12: Stirnrad
- 13: Stirnrad
- 14: Stirnrad
- 15: zweite hydrostatische Einheit
- 16: zweite Fahrbereichskupplung
- 17: Stirnrad
- 18: Stirnrad
- 19: erste Fahrbereichskupplung
- 20: Stirnrad
- 21: Stirnrad
- 22: Stirnrad
- 23: Stirnrad
- 24: Kupplung für Rückwärtsfahrt
- 25: gemeinsames Bauteil
- 26: Abtrieb

## Patentansprüche

1. Leistungsverzweigungsgetriebe mit einem hydrostatischen Leistungszweig und einem mechanischen Leistungszweig, welches über ein Summierungsgetriebe (8) summiert wird, mit zwei Fahrbereichen für eine Vorwärtsfahrtrichtung und einem Fahrbereich für eine Rückwärtsfahrtrichtung mit einer Kupplung (19) für einen ersten Fahrbereich und einer Kupplung (16) für einen zweiten Fahrbereich, **dadurch gekennzeichnet, dass** der hydrostatische Leistungszweig eine erste Hydrostateinheit (10) und eine zweite Hydrostateinheit (15) aufweist, welche über ein gemeinsames Bauteil (25) in ihren Hubvolumina gemeinsam verstellbar sind, und der Fahrbereich für eine Rückwärtsfahrtrichtung über eine Kupplung (24) betätigbar ist.

2. Leistungsverzweigungsgetriebe nach Anspruch 1, dadurch g e - **kennzeichnet**, dass in einer Ausgangsstellung des gemeinsamen Bauteils (25) die erste Hydrostateinheit (10) auf Hubvolumen Null und die zweite Hydrostateinheit (15) auf ihr maximales Hubvolumen eingestellt ist.

3. Leistungsverzweigungsgetriebe nach Anspruch 1, dadurch g e - **kennzeichnet**, dass in einer Endstellung des gemeinsamen Bauteils (25) die zweite Hydrostateinheit (15) auf Hubvolumen Null und die erste Hydrostateinheit (10) auf ihr maximales Hubvolumen eingestellt ist.

4. Leistungsverzweigungsgetriebe nach Anspruch 1, dadurch g e - **kennzeichnet**, dass die erste Hydrostateinheit (10) mit einem inneren Zentralrad (9) des Summierungsgetriebes (8) und die zweite Hydrostateinheit (15) mit einem Planetenträger (11) des Summierungsgetriebes (8) in Verbindung steht.

5. Leistungsverzweigungsgetriebe nach Anspruch 1, dadurch g e - **kennzeichnet**, dass das Summierungsgetriebe (8) als Planetengetriebe ausgeführt ist, wobei ein äußeres Zentralrad (7) mit einer Eingangswelle (2) des Leistungsverzweigungsgetriebes in Verbindung steht, und ein Planetenträger (11) entweder über die Kupplung für den ersten Fahrbereich (19) oder über die Kupplung für den zweiten Fahrbereich (16) mit einem Abtrieb (26) verbindbar ist.

6. Leistungsverzweigungsgetriebe nach Anspruch 1, dadurch g e - **kennzeichnet**, dass die Kupplung für die Rückwärtsfahrt (24) einerseits mit einem Planetenträger (11) des Summierungsgetriebes (8) und andererseits mit einem Abtrieb (26) in Verbindung steht.

7. Leistungsverzweigungsgetriebe nach Anspruch 1, dadurch g e - **kennzeichnet**, dass zwischen einer Eingangswelle (2) und einer Abtriebswelle (26) des Leistungsverzweigungsgetriebes ein Achsabstand vorhanden ist.

8. Leistungsverzweigungsgetriebe nach Anspruch 1, dadurch g e - **kennzeichnet**, dass eine Arbeitspumpe (5) und eine Speisepumpe (4) koaxial zu einer Eingangswelle (2) mit einem Antriebsmotor (1) verbunden sind.

9. Leistungsverzweigungsgetriebe nach Anspruch 1, **dadurch gekennzeichnet, dass** bei einer Schaltung von einem ersten Fahrbereich in den zweiten Fahrbereich mindestens eine der Kupplungen (16, 19) für den Fahrbereich so lange in einem Schlupfzustand betrieben werden, bis das gemeinsame Bauteil (25) die Hydrostateinheiten (10, 15) auf ein geändertes Hubvolumen verstellt hat.

## Claims

1. Power split transmission having a hydrostatic power branch and having a mechanical power branch, which power split transmission is summed by means of a summing gearing (8), having two drive ranges for a forward travel direction and one drive range for a reverse travel direction, having a clutch (19) for a first drive range and a clutch (16) for a second drive range, **characterized in that** the hydrostatic power branch has a first hydrostatic unit (10) and a second hydrostatic unit (15) which can be adjusted jointly in terms of their swept volumes by means of a common component (25), and the drive range for a reverse travel direction can be actuated by means of a clutch (24).

2. Power split transmission according to Claim 1, **characterized in that**, in a starting position of the common component (25), the first hydrostatic unit (10) is set to zero swept volume and the second hydrostatic unit (15) is set to its maximum swept volume.

3. Power split transmission according to Claim 1, **characterized in that**, in an end position of the common component (25), the second hydrostatic unit (15) is set to zero swept volume and the first hydrostatic unit (10) is set to its maximum swept volume.

4. Power split transmission according to Claim 1, **characterized in that** the first hydrostatic unit (10) is connected to an inner central gear (9) of the summing gearing (8) and the second hydrostatic unit (15) is connected to a planet carrier (11) of the summing gearing (8).

5. Power split transmission according to Claim 1, **characterized in that** the summing gearing (8) is designed as a planetary gear set, wherein an outer central gear (7) is connected to an input shaft (2) of the power split transmission, and a planet carrier (11) can be connected to a drive output (26) either via the clutch for the first drive range (19) or via the clutch for the second drive range (16).

6. Power split transmission according to Claim 1, **characterized in that** the clutch for reverse travel (24) is connected at one side to a planet carrier (11) of the summing gearing (8) and at the other side to a drive output (26).

7. Power split transmission according to Claim 1, **characterized in that** there is an axis-centre distance between an input shaft (2) and a drive output shaft (26) of the power split transmission.

8. Power split transmission according to Claim 1, **characterized in that** a working pump (5) and a feed pump (4) are connected, coaxially with respect to an input shaft (2), to a drive engine (1).

9. Power split transmission according to Claim 1, **characterized in that**, in the event of a shift from a first drive range into the second drive range, at least one of the clutches (16, 19) for the drive range is operated in a slipping state until the common component (25) has adjusted the hydrostatic units (10, 15) to a changed swept volume.

## Revendications

1. Transmission à répartition de puissance comprenant une branche de puissance hydrostatique et une branche de puissance mécanique qui est additionnée par le biais d'une transmission additive (8), comprenant deux plages de conduite pour une direction de conduite en marche avant et une plage de conduite pour une direction de conduite en marche arrière avec un embrayage (19) pour une première plage de conduite et un embrayage (16) pour une deuxième plage de conduite, **caractérisée en ce que** la branche de puissance hydrostatique présente une première unité hydrostatique (10) et une deuxième unité hydrostatique (15), dont les cylindrées peuvent être réglées en commun par le biais d'un composant commun (25), et la plage de conduite pour une direction de conduite en marche arrière peut être actionnée par un embrayage (24).

2. Transmission à répartition de puissance selon la revendication 1, **caractérisée en ce que** dans une position de départ du composant commun (25), la première unité hydrostatique (10) est ajustée à une cylindrée nulle et la deuxième unité hydrostatique (15) est ajustée à une cylindrée maximale.

3. Transmission à répartition de puissance selon la revendication 1, **caractérisée en ce que** dans une position de fin de course du composant commun (25), la deuxième unité hydrostatique (15) est ajustée à une cylindrée nulle et la première unité hydrostatique (10) est ajustée à sa cylindrée maximale.

4. Transmission à répartition de puissance selon la revendication 1, **caractérisée en ce que** la première unité hydrostatique (10) est en liaison avec un pignon central interne (9) de la transmission additive (8) et la deuxième unité hydrostatique (15) est en liaison avec un porte-satellites (11) de la transmission additive (8).

5. Transmission à répartition de puissance selon la revendication 1, **caractérisée en ce que** la transmission additive (8) est réalisée sous forme de transmission planétaire, un pignon central extérieur (7) étant en liaison avec un arbre d'entrée (2) de la transmission à répartition de puissance, et un porte-satellites (11) pouvant être connecté à une prise de force (26) soit par le biais de l'embrayage pour la première plage de conduite (19) soit par le biais de l'embrayage pour la deuxième plage de conduite (16).

6. Transmission à répartition de puissance selon la revendication 1, **caractérisée en ce que** l'embrayage pour la conduite en marche arrière (24) est en liaison d'une part avec un porte-satellites (11) de la transmission additive (8) et d'autre part avec une prise de force (26).

7. Transmission à répartition de puissance selon la revendication 1, **caractérisée en ce qu'**entre un arbre d'entrée (2) et un arbre de prise de force (26) de la transmission à répartition de puissance est prévu un entraxe.

8. Transmission à répartition de puissance selon la revendication 1, **caractérisée en ce qu'**une pompe de travail (5) et une pompe d'alimentation (4) sont connectées à un moteur d'entraînement (1) coaxialement à un arbre d'entrée (2).

9. Transmission à répartition de puissance selon la revendication 1, **caractérisée en ce que** dans le cas d'une commutation d'une première plage de conduite dans la deuxième plage de conduite, au moins l'un des embrayages (16, 19) est entraîné pour la plage de conduite dans un état de glissement jusqu'à ce que le composant commun (25) ait réglé les unités hydrostatiques (10, 15) à une cylindrée différente.
